(19) Europäisches Patentamt

European Patent Office

Office européen des brevets

(11) **EP 0 912 624 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.[7]: **C08G 63/82**, C08G 63/08, C08G 64/30, C08G 67/04

(21) Anmeldenummer: **97931592.6**

(22) Anmeldetag: **11.07.1997**

(86) Internationale Anmeldenummer:
**PCT/BE1997/000081**

(87) Internationale Veröffentlichungsnummer:
**WO 1998/002480 (22.01.1998 Gazette 1998/03)**

(54) **VERFAHREN ZUR HERSTELLUNG ALIPHATISCHER POLYESTER**

PROCESS FOR PREPARING ALIPHATIC POLYESTERS

PROCEDE DE FABRICATION DE POLYESTERS ALIPHATIQUES

(84) Benannte Vertragsstaaten:
**AT BE CH DE DK ES FI FR GB IT LI LU NL SE**

(30) Priorität: **15.07.1996 DE 19628472**

(43) Veröffentlichungstag der Anmeldung:
**06.05.1999 Patentblatt 1999/18**

(73) Patentinhaber: **Brussels Biotech**
**1180 Bruxelles (BE)**

(72) Erfinder:
- **FRITZ, Hans-Gerhard**
  **D-73066 Uhingen (DE)**
- **JACOBSEN, Sven**
  **D-73728 Esslingen am Neckar (DE)**
- **JEROME, Robert**
  **B-4130 Tilff (BE)**
- **DEGEE, Philippe**
  **B-4460 Grâce-Hollogne (BE)**
- **DUBOIS, Philippe**
  **B-4260 Ciplet (BE)**

(74) Vertreter: **Vandeberg, Marie-Paule L.G. et al**
**Office Kirkpatrick S.A.,**
**32, Avenue Wolfers**
**1310 La Hulpe (BE)**

(56) Entgegenhaltungen:
**EP-A- 0 372 221          BE-A- 1 008 099**
**DE-A- 2 160 405          US-A- 4 379 914**

- **CARRIERE, F. J. ET AL: DIE MAKROMOLEKULARE CHEMIE, Bd. 189, Nr. 4, April 1988, Seiten 717-722, XP000020046**
- **DUBOIS, PH. ET AL.: POLYMER PREPRINTS, Bd. 35, Nr. 2, August 1994, Seiten 536-537, XP002044182**
- **CHEMICAL ABSTRACTS, vol. 122, no. 20, 15.Mai 1995 Columbus, Ohio, US; abstract no. 240699, XP002044184 & JP 06 248 060 A (DAICEL CHEM.) 6.September 1994**
- **DEG E, PH. ET AL.: MACROMOLECULAR CHEMISTRY AND PHYSICS, Bd. 198, Nr. 6, Juni 1997, Seiten 1973-1984, XP002044183**

**Beschreibung**

Die Erfindung betrifft ein Verfahren zur Herstellung von aliphatischen Polyestern und/oder Copolyestern, erhalten aus einer Polyreaktion mindestens eines Monomers aus der Gruppe der Lactide.

Polymere finden heutzutage in vielerlei Produkten Verwendung. Aufgrund der großen Verbreitung von Polymeren bilden diese zunehmend ein ökologisches Problem, da ein Großteil der jährlich 150 Mio. Tonnen weltweit produzierten Polymeren bioresistent ist, d. h. nicht von den in der Natur ablaufenden Prozessen abgebaut werden können. Mögliche Lösungen zur Verminderung dieses Abfallproblems sind die Verbrennung, Wiederaufbereitung, Pyrolyse oder andere chemische Abbauverfahren. Diese weisen jedoch teilweise erhebliche Nachteile auf.

Eine andere Möglichkeit, das Abfallproblem zu vermindern, ist die Entwicklung von Polymeren, die von in der Natur ablaufenden Prozessen assimiliert und abgebaut werden. Daher finden schmelzestabile, aliphatische Polyester und/oder Copolyester und besonders auf Lactiden basierende Polyester eine zunehmende Beachtung, wobei sie als Standardkunststoffe mit den herkömmlichen petrochemischen Polymeren, die in Form von Verpackungen, Papierbeschichtungen, Fäden, Schäumen, Folien, etc. verwendet werden, konkurrieren können.

Die seit langem bekannten hochmolekularen aliphatischen Polyester, welche aus Ringöffnungspolymerisation von zyklischen Verbindungen wie 1,4-Dioxan-2,6-Dion (Glykolid) und 3,5-Dimethyl-1,4-Dioxan-2,6-Dion (Lactid) hergestellt werden können, sind jedoch empfindlich gegen Wärme und Wasser. Dieser Nachteil wurde für die Herstellung von therapeutischen Hilfsmitteln in der Medizin und Pharmakologie wie beispielsweise Nahtmaterial genutzt, da dieses Nahtmaterial im Körper leicht abgebaut werden kann. Allerdings ist die Herstellung dieser hochmolekularen Lactid-Polymeren und Copolymeren mit den entsprechenden physikalischen Eigenschaften ausgesprochen aufwendig und kostenintensiv. Die zur Herstellung solcher hochmolekularen Lactidpolymeren und Copolymeren für die Medizin und Pharmakologie verwendeten Verfahren, wie beispielsweise die Lösemittelextraktion, sind daher nicht geeignet, petrochemische Polymere zu ersetzen.

Notwendig zum Ersatz petrochemischer Polymere durch biologisch abbaubare ist daher die Bereitstellung eines kostengünstig und einfach herzustellenden geeigneten Polyesters und Copolyesters und ein entsprechendes Verfahren zu seiner Herstellung, um eine kostengünstige, umweltfreundliche integrierte Produktion bei hohen Produktionsvolumina zu erreichen.

Es ist bekannt, daß eine große Anzahl von organo-metallischen und metallischen Verbindungen die Ringöffnungspolymerisation von Lactiden, Lactonen, zyklischen Anhydriden und zyklischen Carbonaten beschleunigt. Diese organo-metallischen und metallischen Verbindungen steuern die Polymerisationsgeschwindigkeit, den Grad der Racemisation, den Gehalt an verbleibendem Monomer im gewonnenen Polymer und die Polymerzusammensetzung. Nachteilig fördern diese organo-metallischen und metallischen Verbindungen auch Seitenreaktionen wie inter- und intramolekulare Transesterifikationsreaktionen in aliphatischen Polyestern und Copolyestern. Solche nachteiligen Nebenreaktionen können auch bei der anschließenden thermischen Behandlung und Verarbeitung des gewonnenen Polymers auftreten. Durch intramolekulare Transesterifikationsreaktionen werden gasförmige Abbauprodukte sowie Monomere und zyklische Oligomere gebildet, wodurch eine Verbreiterung der Molekulargewichtsverteilung, eine Erniedrigung des Molekulargewichts, ein begrenzter Monomerumsatz in das Polymer und ein Gewichtsverlust des Polymers bei Erwärmung erfolgt.

Eine Möglichkeit zur Vermeidung der Transesterifikationsreaktionen ist die Entfernung des Katalysators durch Lösemittelextraktion und selektivem Abscheiden des Polymers. Jedoch ist diese Technik ausgesprochen kostenintensiv, so daß sich ein Einsatz für den Ersatz von petrochemischen Polymeren durch aliphatische Polyester und/oder Copolyester nicht anbietet. Eine weitere Möglichkeit, Transesterifikationsreaktionen zu vermeiden, ist der Zusatz von Metalldesaktivatoren. Diese können jedoch nicht eine Verringerung des Molekulargewichts verhindern, weshalb als eine weitverbreitete Alternative eine Kombination aus Stabilisatoren und Metalldesaktivatoren mit einer Reduktion der Menge der metalbasierenden Initiierungssysteme bzw. Katalysatoren angewendet wird. Als ausgesprochener Nachteil ergibt sich hierbei, daß die Polymerisationszeit dermaßen verlängert wird, daß der aliphatische Polyester und/oder Copolyester in einem Zweistufenprozeß hergestellt werden muß, wobei in einer ersten Stufe die Vorpolymerisierung in einem Reaktor stattfindet, worauf in einer zweiten Stufe die Polymerisierung in reaktiver Extrusion stattfindet, wobei das entstehende Polymer anschließend gereinigt werden muß, um verbleibende Monomere zu entfernen.

Mit auf Seltenen Erdmetallen basierenden oder speziellen Alkoxid-Initiierungssystemen könnte die Polymerisation auch in einem Einstufenprozeß in reaktiver Extrusion durchgeführt werden (WO 91/05001 und US 5 292 859). Abgesehen von den hohen Kosten dieser speziellen Initiierungsysteme weisen die damit hergestellten, auf Lactid und Lacton basierenden Polyester eine geringe thermische Stabilität auf, so daß bei der Verarbeitung der gewonnenen Polymere eine Erniedrigung des Molekulargewichts auch nicht durch Zugabe von Metalldesaktivatoren verhindert werden kann.

Polymerisationsprozesse mit Extrusionsmaschinen wurden bereits vorgeschlagen (EP 0 372 221), wobei hier aber die Extrusionsmaschinen nicht mit dafür vorgesehenen Verfahrensparametern betrieben wurden, sondern nur als Förderaggregat verwendet wurden. Es wurden auf diese Weise bisher nur Polymer/Monomer-Gemische hergestellt, die in weiteren Verfahrensschritten aufbereitet werden mußten.

Aufgabe der vorliegenden Erfindung ist es, ein Verfahren zur Herstellung von aliphatischen Polyestern und/ oder Copolyestern zu schaffen, welche eine schnelle Polymerisation aufweisen, so daß diese in einem Einstufenprozeß hergestellt werden können.

Das Verfahren zur Herstellung von aliphatischen Polyestern und/oder Copolyestern mit einer Extrusionsmaschine, ist dadurch gekennzeichnet, daß

1) in einer Polyreaktion mindestens ein Monomer aus der Gruppe der Lactide umgesetzt wird;
2) in der Polyreaktion ein Reaktionsgemisch aus mindestens Sn-bis(2-ethylhexanoat) als Katalysator;
3) und ferner mindestens Triphenylphosphin als Cokatalysator verwendet wird; und
4) das Verfahren ein kontinuierlich geführter, einstufiger, reaktiver Extrusionsprozeß ist.

Ein Vorteil dieses Verfahren zur Herstellung von aliphatischen Polyestern und/oder Copolyestern ist, daß diese eine hohe Polymerisationsgeschwindigkeit aufweisen, welche eine kostengünstige Herstellung in einem Einstufenprozeß ermöglicht. Außerdem kann vorteilhafterweise das aus Katalysator und Cokatalysator bestehende Initiierungssystem in der Polymermatrix verbleiben, ohne einen speziellen Desaktivator zugeben oder eine Extraktion durchführen zu müssen.

Bevorzugt ist das Molverhältnis des Cokatalysators zum Katalysator im Bereich von 100:1 bis 1:100 gewählt. Bei einem solchen Molverhältnis ist die katalytische Aktivität des Katalysator/Cokatalysator-Systems ausreichend hoch, so daß die kinetischen Anforderungen an eine Herstellung des erfindungsgemäßen aliphatischen Polyesters und/oder Copolyesters in einem Einstufenprozeß erfüllt werden.

Der Katalysator Sn-bis(2-ethylhexanoat) ist käuflich zu niedrigen Kosten erhältlich. Es ist im Vergleich zu anderen Zinnverbindungen nicht sehr empfindlich gegenüber Sauerstoff und Feuchtigkeit und außerdem von der FDA als Nahrungsmittelzusatz genehmigt. Dies ermöglicht seine Verwendung in Verpackungsmaterialien für Lebensmittel.

Der Cokatalysator ist Triphenylphosphin $P(Ph)_3$.

Diese Katalysator/Cokatalysator-Kombination ermöglicht eine hohe Polymerisationsgeschwindigkeit des aliphatischen Polyesters und/oder Copolyesters.

Besonders bevorzugt ist das Molverhältnis des Katalysators Sn-bis(2-ethylhexanoat) zum Cokatalysator $P(Ph)_3$ 1:1. Bei einem solchen Molverhältnis ergibt sich vorteilhafterweise eine sehr große katalytische Aktivität, wodurch die Polymerisationsgeschwindigkeit weiter ansteigt und ein Einstufenprozeß zur Herstellung des Polyesters und Copolyesters noch vorteilhafter durchzuführen ist.

Der aliphatische Polyester und/oder Copolyester umfaßt insbesondere einen Stabilisator. Dieser verhindert radikalische Kettenabbruchreaktionen zu einem großen Teil und auch Depolymerisationsreaktionen, sowohl während des Polymerisationsprozesses als auch während der Weiterverarbeitung in der Schmelze. Die Zugabe des Stabilisators zu dem aliphatischen Polyester und/oder Copolyester erfolgt entweder im Anschluß an den Polymerisationsprozeß oder aber zu Beginn des Polymerisationsprozesses, wobei die zuletzt genannte Alternative bevorzugt ist.

Besonders bevorzugt umfaßt der Stabilisator Organophosphite, phenolische Verbindungen oder Mischungen daraus. Organophosphite und phenolische Verbindungen oder Mischungen daraus beeinflussen die Polymerisationskinetik nicht negativ. Hierdurch führen sie nicht zu einer Verminderung der Polymersiationsgeschwindigkeit, was negative Auswirkungen auf die Durchführbarkeit eines Einstufenprozesses zur Herstellung des aliphatischen Polyesters und Copolyesters hätte. Hier wird vorzugsweise als Stabilisator Bis(2,4-di-t-butyl-phenyl)pentaerythrioldiphosphit verwendet, da dieses ebenfalls von der FDA für den Kontakt mit Lebensmitteln zugelassen ist und daher der aliphatische Polyester und/oder Copolyester auch für die Verpackung von Lebensmitteln verwendet werden kann.

Der Stabilisator ist bevorzugt in einem Anteil von weniger als zwei Gewichtsanteile auf 20 Gew.-Anteile Monomer, besonders bevorzugt von weniger als einem Gew.-Anteil auf 100 Gew.-Anteile Monomer, enthalten.

Weiterhin ist bevorzugt ein Moderator zur Kontrolle des Molekulargewichts enthalten. Dies ist vorteilhaft, da die physikalischen Eigenschaften des aliphatischen Polyesters und/oder Copolyesters wie beispielsweise Elastizitätsmodul, Zugfestigkeit, Bruchdehnung, Schlagzähigkeit und Biegemodul ein maximales Plateau bei einem bestimmten durchschnittlichen Molekulargewicht erreichen. Durch die Zugabe eines Moderators können somit die gewünschten Eigenschaften des aliphatischen Polyesters und Copolyesters gezielt eingestellt und kontrolliert werden.

Bevorzugt ist der Moderator aus Phenolen, Alkoholen, ein- oder zweiwertigen Aminen, Thiolen und aus diesen Verbindungsklassen gebildeten multifunktionellen Wasserstoffverbindungen oder multifunktionellen Polymeren ausgewählt. Diese können auch als Verunreinigungen im Monomer vorliegen, was vorteilhaft ist, da so die benötige Reinheit des verwendeten Monomers auf ein definiertes Maß reduziert werden kann, wodurch teure Reinigungsschritte des Monomers vermieden werden können.

Der aliphatische Polyester und/oder Copolyester enthält bevorzugt einen Füll- und/oder Verstärkungsstoff. Besonders bevorzugt ist der Füll- und/oder Verstärkungsstoff mit reaktiven Endgruppen zur Moderierung des Molekulargewichts des Polyesters und Copolyesters versehen. Hierduch kann eine einfache Ankopplung des Füll- und/oder Verstärkungsstoffes an das Polymer ermöglicht werden. Die Füll- und/oder Verstärkungsstoffe können sowohl zu Beginn, während als auch im Anschluß an die Polymerisation zugegeben und eingearbeitet werden.

Weiterhin ist der aliphatische Polyester und/oder Copolyester insbesondere dadurch gekennzeichnet, daß das Molekulargewicht zwischen 30.000 und 300.000 g/mol, bevorzugt zwischen 80.000 und 200.000 g/mol, liegt, und daß die Molekulargewichtsverteilung ≤ 2,0 ist. Innerhalb dieser bevorzugten Bereiche für das Molekulargewicht weist der aliphatische Polyester und/oder Copolyester sehr gute physikalische Eigenschaften in Bezug auf beispielsweise den Elastizitätsmodul und den Biegemodul auf. Durch die angegebenen Bereiche für das Molekulargewicht werden weiterhin die Viskosität und die Abbaubedingungen des Polymers sowie die Auswahl der verwendeten Methoden zur Weiterverarbeitung der Polymerschmelze beeinflußt.

Insbesondere beträgt der Monomeranteil im Polymer weniger als 5 Gew.%, bevorzugt weniger als 2 Gew.%. Auf diese Weise werden schädliche Einflüsse auf die bei der nachfolgenden Verarbeitung der Polymerschmelze verwendeten Apparaturen durch beispielsweise Beeinträchtigungen der Apparaturen durch noch vorliegende freie Säure vermieden. Gegebenenfalls wird eine Entgasung der Reaktionsmischung durchgeführt, um den verbleibenden Monomeranteil weiter abzusenken.

Das Molverhältnis zwischen eingesetztem Monomer oder einer Mischung von Monomeren und der Katalysator/Cokatalysator-Mischung beträgt bevorzugt mindestens 5000:1. Bei einem derart gewählten Molverhältnis werden die negativen Effekte der verwendeten Katalysatoren, insbesondere die Transesterifikationsreaktionen, verringert, wobei gleichzeitig die Polymerisationsgeschwindigkeit noch ausreichend hoch ist, um in einem Einstufenprozeß den aliphatischen Polyester und/oder Copolyester herzustellen. Des weiteren ist bei einem solchen Molverhältnis die Zugabe von Metalldesaktivatoren nicht zwingend erforderlich.

Weiterhin weist das Monomer oder eine Mischung von Monomeren bevorzugt einen freien Säuregehalt von maximal 10 mequ/kg und einen Wassergehalt von maximal 200 ppm auf. Daher wird als Ausgangsstoff für den aliphatischen Polyester und/oder Copolyester kein aufwendig gereinigtes und damit teures Monomer als Ausgangssubstanz benötigt.

Dieses erfindungsgemäße Verfahren zur Herstellung des aliphatischen Polyesters und/oder Copolyesters ist besonders vorteilhaft, da der aliphatische Polyester und/oder Copolyester in einem einstufigen und kontinuierlich geführten Extrusionsprozess ausgesprochen kostengünstig bei sehr guter Ausbeute und Qualität des Polymerprodukts erhalten wird.

Weiterhin erfolgt bevorzugt in der Phase der Oligomerisierung ein Durchmischen und Homogenisieren der Mischung und in der Phase des Auspolymerisierens ein Druckaufbau mit thermisch-mechanischem Energieeintrag.

Durch das Durchmischen und Homogenisieren der Mischung in der Phase der Oligomerisierung wird eine hohe Anzahl an Platzwechselvorgängen in der Extrusionsmaschine ermöglicht, wodurch sich die Polymerise-tionsgeschwindigkeit erhöht. Der in der Phase des Auspolymerisierens erfolgende Druckaufbau mit thermisch-mechanischem Energieeintrag kombiniert mit der hohen Anzahl an Platzwechselvorgängen in der Extrusionsmaschine reduziert die durchschnittliche Verweilzeit des Reaktionsgemisches in der Extrusionsmaschine soweit, daß die Polyreaktion im wesentlichen schon innerhalb der Extrusionsmaschine abgeschlossen ist. Dieses vereinfacht in erheblichem Maße die Herstellung des aliphatischen Polyesters und Copolyesters, wodurch die Kosten für das erfindungsgemäße Verfahren deutlich gesenkt werden.

Bevorzugt wird die Extrusionsmaschine ein gleichsinnig drehender, dicht kämmender Zwei-Schneckenextruder sein. Dieser ermöglicht eine hohe Anzahl an Platzwechselvorgängen und gleichzeitig einen Druckaufbau mit thermisch-mechanischem Energieeintrag. Vorteilhaft ist weiterhin, daß ein Zwei-Schneckenextruder aus Schnecken und Zylinderteilen modular aufgebaut ist, wodurch eine größtmögliche Flexibilität in einer Anlage zur Herstellung des erfindungsgemäßen aliphatischen Polyesters und Copolyesters zur optimalen Anpassung an die spezifischen Polymerisationsbedingungen ermöglicht wird.

Insbesondere weisen die temperierbaren Abschnitte der Extrusionsmaschine eine Temperatur in einem Bereich zwischen 100 und 230°C, bevorzugt zwischen 180 und 195°C, auf. Höhere Temperaturen resultieren in einer Verfärbung des polymeren Endprodukts. Weiterhin wird in diesen Temperaturbereichen eine schmale Molekulargewichtsverteilung von vorzugsweise < 2,0 des aliphatischen Polyesters und Copolyesters erhalten.

Das erfindungsgemäße Verfahren ist weiterhin insbesondere dadurch gekennzeichnet, daß

- in einem ersten Schritt die Ausgangsstoffe Monomere und Comonomere, Katalysatoren, Cokatalysatoren, Moderatoren, Stabilisatoren, Füll- und/oder Verstärkungsstoffe vermischt werden;

- in einem zweiten Schritt diese Mischung der Extrusionsmaschine zudosiert wird;

- in einem dritten Schritt das gewonnene Polymer kontinuierlich polymerisiert und ausgetragen wird; und

- in einem vierten Schritt das gewonnene Polymer ausgeformt wird.

Die Zudosierung der Mischung in die Extrusionsmaschine erfolgt bevorzugt gravimetrisch, kann jedoch auch volumetrisch erfolgen. Die gravimetische Dosierung hat den Vorteil, daß auch unregelmäßig geformtes Füllgut einfach und konstant der Extrusionsmaschine zudosiert werden kann.

Das gewonnene Polymer wird bevorzugt nach dem Austrag durch Kühlung verfestigt, wobei die Kühlung bevorzugt über einem Förderband mit Luft erfolgt.

Das so gewonnene Polymer wird bevorzugt in einem Granulierer zu Kunststoffgranulat aufgeformt, welches eine übliche Verkaufsform für Polymere darstellt. Allerdings kann das gewonnene Polymer auch in anderen Verkaufsformen hergestellt werden.

Weiterhin werden in dem erfindungsgemäßen Verfahren der Moderator, der Stabilisator, die Füll- und/oder Verstärkungsstoffe bevorzugt gesondert der Mischung zugefügt. Damit wird die Möglichkeit gegeben, auf die Polymerreaktion einen größeren Einfluß nehmen zu können. Allerdings können sowohl der Moderator als auch alle weiteren Ausgangsstoffe einzeln zudosiert werden, ebenso wie die entsprechenden Dosierstellen auch räumlich voneinander getrennnt angeordnet sein können.

Bevorzugt ist weiterhin vorgesehen, daß mittels einer in-line- oder on-line-Messung die Viskosität des Polymers und/oder Copolymers durch eine in-line- oder on-line-infrarotspektroskopische Messung der Monomerumsatz des gewonnenen Polymers bestimmt wird. Diese Daten werden bevorzugt zur direkten Regelung der Verfahrensparamter und/oder Steuerung der Zugabemenge des Moderators verwendet werden.

Vorzugsweise kann der verbleibende Monomeranteil im Polymer durch ein Entgasungsaggregat in der Extrusionsmaschine reduziert werden. Hierdurch kann vorteilhafterweise der Monomeranteil im Polymer weiter abgesenkt werden.

Diese und weitere Vorteile des aliphatischen Polyesters und/oder Copolyesters und des erfindungsgemäßen Verfahrens zu seiner Herstellung werden in den folgenden Ausführungsbeispielen und Zeichnungen gezeigt.

Die Zeichnungen zeigen im einzelnen:

Figur 1: ein Verfahrenskonzept zur Herstellung des Polyesters und/oder Copolyesters;

Figur 2: ein Schneckenkonzept für den Zwei-Schneckenextruder zur Herstellung des Polyesters und/oder Copolyesters mit einer Förderrichtung von links nach rechts (entsprechend 52 zu 56);

Figur 3: eine Meßdüse und Regeleinheit, welche den Zwei-Schneckenextruder beschließen.

Beispiel 1: Kinetische Experimente der Polymerisation von aliphatische Polyester und/oder Copolyester

Die Polymerisation wurde in allen Ausführungsbeispielen in der im folgenden beschriebenen Weise durchgeführt.

Die Polymerisation fand in einer vorher ausgeflammten und mit Stickstoff gespülten 25ml Ampulle statt, die mit einem durch ein Septum verschlossenen Eingang versehen ist. Für jedes kinetische Experiment wurden mindestens 5 Ampullen mit Lactid sehr schnell unter Luftatmosphäre gefüllt. Die Ampullen wurden evakuiert und zweimal mit Stickstoff gespült, bevor der Katalysator gelöst in Toluol oder Tetrahydrofuran durch das Septum mit Spritzen mit Nadeln aus rostfreiem Stahl zugegeben wurde. Die Lösemittel wurden unter reduziertem Druck verdampft, die Ampullen versiegelt und in einen thermostatischen Ofen gebracht. Die Ampullen wurden zu bestimmten Zeitpunkten aus dem Ofen genommen, mit kaltem Wasser abgekühlt, die Spitze abgebrochen und der Inhalt in $CHCl_3$ aufgelöst. Die Zinnrückstände wurden extrahiert, indem die organische Schicht nacheinander mit wässeriger HCl-Lösung (0,1molar) und zweimal mit deionisiertem Wasser gewaschen wurde. Um den Monomerumsatz mittels FTIR-Spektroskopie zu bestimmen, wurde ein Teil der Lösung entnommen und in einer KBr Zelle verdampft, die verbleibende Lösung wurde in kaltes Methanol geschüttet. Das Polymer wurde so durch Ausfällung wiedergewonnen und unter Vakuum bis zu Gewichtskonstanz getrocknet.

Die Monomerumwandlung wurde durch FTIR-Spektroskopie bestimmt, wobei als Referenz eine Kalibrierung des Verhältnisses von Polylactid (PLA) zu Lactid (LA) ([PLA]/[LA]) zum Verhältnis von $A_{1323}/A_{935}$ verwendet wird und mittels $^1$HNMR-Spektroskopie in $CDCl_3$ bei bis 25°C die relativen Intensitäten der Monomer- und Polymer-Methin-Gruppen überprüft wurden. Das Molekulargewicht des Polylactids wurde in $CHCl_3$ bei 35°C durch Verwendung eines WATERS 610 Flüssigchromatographen bestimmt. Das Molekulargewicht und die Molekulargewichtsverteilung wurde relativ zu einer Polystyrol(PS)-Kalibrierung ermittelt und auf eine absolute Basis unter Verwendung einer Universalkalibrierung korrigiert ($K_{PS} = 1,67 \cdot 10^{-4}$, $a_{PS} = 0,692$, $K_{PLA} = 1.05 \cdot 10^{-3}$, $a_{PLA} = 0,563$).

Beispiel 2 (nicht erfindungsgemäß): Lactidpolymerisation, katalysiert durch Sn-bis(2-ethylhexanoat).

Die kinetischen Versuche wurden in Schmelze durchgeführt. Dazu wurde Sn-bis(2-ethylhexanoat) als Katalysator verwendet (Tabelle 2). Eine Erhöhung des anfänglichen molaren Verhältnisses von L-Lactid zu Sn-bis(2-ethylhexanoat) erniedrigt die Polymerisationsgeschwindigkeit (Tabelle 2: Eintrag 1 bis 3). Der Grad der Umwandlung wurde mittels FTIR-Spektroskopie ermittelt (Referenz ist eine Lactid-Polylactid Kalibrierung) und erreicht ein Maximalplateau zwischen 95% und >99% nach 3h für ein anfängliches molares Verhältnis von L-Lactid und Sn-bis(2-ethylhexanoat) ($[L-LA]_0$ [Sn]) von 100:1, nach 17h für ein $[L-LA]_0/[Sn]$-Verhältnis von 1000 und nach 50h für ein$[L-La]_0/[Sn]$-Verhältnis von 10000:1. Das Molekulargewicht erreicht nach 15h ein Plateau bei ungefähr 200000 g/mol und nimmt bei Verlängerung der Reaktionszeit wieder zu. Das Molekulargewicht nimmt mit steigendem Katalysator-Anteil ab. Eine Erhöhung der Polymerisationstemperatur bei konstantem anfänglichen molaren Monomer-Sn(II)-Verhältnis erhöht ebenfalls die Polymerisationsgeschwindigkeit. (Tabelle 2, Eintrag 4 bis 7). Im gesamten Temperaturbereich durchläuft das Molekulargewicht ein Maximum und nimmt in der Folgezeit wieder ab. Die Erhöhung der Polymerisationstemperatur trägt weiterhin dazu bei, das maximal erreichbare Molekulargewicht zu senken und den maximalen Monomerumsatz von 98% bei 150°C auf 96% bei 180°C zu erniedrigen.

Tabelle 2:

| Einfluß des anfänglichen molaren Verhältnisses zwischen Monomer und Sn-bis(2-ethylhexanoat) und der Polymerisationstemperatur auf die Kinetik der L-Lactidpolymerisation in der Schmelze. | | | | | |
|---|---|---|---|---|---|
| Eintrag | $[L-LA]_0/[Sn]$ | T[°C] | $t_{90}[h]$[1] | $t_{100}[h]$[1] | $M_{n100} \cdot 10^{-3}$[2] |
| 1 | 100 | 110 | 1,5 | 3,0 | 53 |
| 2 | 1000 | 110 | 10,0 | 17,0 | 220 |
| 3 | 10000 | 110 | 22,0 | 50,0 | 304 |
| 4 | 1000 | 110 | 10,0 | 17,0 | 220 |
| 5 | 1000 | 130 | 4,2 | 10,0 | 175 |
| 6 | 1000 | 150 | 1,6 | 5,0 | 154 |
| 7 | 1000 | 180 | 0,2 | 0,55 | 87 |

(1) Polymerisationzeit , um jeweils 90% bzw. maximalen Monomerumsatz (theoretisch 100%) zu erreichen.

(2) Zahlenmittleres Molekulargewicht, ermittelt durch SEC in $CHCl_3$.

Beispiel 3: Einfluß von Triphenylphosphin $P(Ph)_3$ als Cokatalysator auf die Kinetik der L-Lactid-Polymerisation, katalysiert durch Sn-bis(2-ethylhexanoat).

Um den Effekt von Triphenylphosphin $P(Ph)_3$ als Cokatalysator zu verdeutlichen, wurde $P(Ph)_3$ in einem äquimolaren Verhältnis zu Sn-bis(2-ethylhexanoat) hinzugegeben. Bei 130°C sind für ein anfängliches molares Verhältnis zwischen L-Lactid und der Kombination aus Sn-bis(2-ethylhexanoat) und $P(Ph)_3$ die Initiierung als auch der Polymerisationsfortgang schneller, wenn $P(Ph)_3$ anwesend ist (Tabelle 3). Oberhalb eines Wertes von 90% für die Monomerumwandlung kann für die Polymerisation in geschlossenen Glasampullen kein beschleunigender Effekt mehr festgestellt werden. Bei einer Temperatur von 180°C ist dieser beschleunigende Effekt immer noch deutlich.

Tabelle 3:

| Einfluß von Triphenylphosphin $P(Ph)_3$ als Cokatalysator auf die L-Lactid-Polymerisation, katalysiert durch Sn-bis (2-ethylhexanoat) bei 130°C und 180°C ([a] $Sn(Oct)_2$, [b] $Sn(Oct)_2 \cdot P(Ph)_3$). | | | | | | | | | |
|---|---|---|---|---|---|---|---|---|---|
| $[L-LA]_0/$ [Sn] | Polym. T [°C] | $t_{80}$[2][min] | | $t_{90}$[2][min] | | $t_{100}$[2][min] | | $M_n \cdot 10^{-3}$[3] | |
| | | [a] | [b] | [a] | [b] | [a] | [b] | [a] | [b] |
| 1000[1] | 130 | 15 | 10 | 24 | 18 | <120 | <120 | 45 | 68 |
| 1000 | 180 | - | - | 15 | 10 | 35 | 18 | 85 | 90 |
| 5000 | 180 | - | - | 27 | 20 | 60 | 45 | 102 | 153 |
| 10000 | 180 | - | - | 48 | 36 | 150 | 120 | 128 | 259 |

(1) 1,44 Äquivalente von 2-Ethylhexan-1-ol pro mol Sn-bis(2-ethylhexanoat) zugegeben.

(2) Polymerisationszeit, um 80%, 90% bzw. maximalen Monomerumsatz (100%) zu erreichen.

(3) Zahlenmittel des Molekulargewichts, mit SEC in $CHCl_3$ bestimmt.

Beispiel 4: Einfluß der Katalysator-/Cokatalysatorkonzentration auf die Kinetik der L-Lactid-Polymerisation.

Die kinetischen Experimente wurden in geschlossenen Glasampullen bei 180°C durchgeführt, wobei verschiedene anfängliche molare Verhältnisse (R) von L-Lactid zur Kombination Sn-bis(2-ethylhexanoat)-Triphenylphosphin zur Anwendung kamen. Die für die Erreichung des maximalen Monomerumsatztes benötigte Zeit $t_{100}$ wird bei einem Anstieg von (R) von 100 auf 10000 größer. So ist $t_{100}$ = 15 min für R = 1000, $t_{100}$ = 45 min für R = 5000 und $t_{100}$ = 120 min für R = 10000.

Beispiel 5: Einfluß des Molverhältnisses (m) von Katalysator zu Cokatalysator auf die Polymerisationskinetik von L-Lactid

Tabelle 4 zeigt die Abhängigkeit des zahlenmittleren Molekulargewichts von Polylactid und des Monomerumsatzes von (m), welches als [Sn-bis(2ethylhexanoat)]/[P(Ph)$_3$] definiert ist, für ein anfängliches molares Verhältnis zwischen L-Lactid und Snbis(2-ethylhexanoat) von 5000:1 und einer Reaktionszeit von 10 bzw. 25 min. Eine Erhöhung des Verhältnisses (m) über 1 besitzt keinen positiven Einfluß auf die Polymerisationsgeschwindigkeit von L-Lactid.

Tabelle 4:

| Einfluß des anfänglichen molaren Verhältnisses (m) zwischen Triphenylphosphin und Sn-bis(2-ethylhexanoat) auf die Polymerisation von L-Lactid bei einer Temperatur von 180°C und einem [L-La]$_0$/[Sn] Verhältnis von 5000:1. | | | | |
|---|---|---|---|---|
| m | Polym. Zeit [min] | Umsatz[%][(1)] | $M_n \cdot 10^{-3}$[(2)] | $M_w/M_n$[(2)] |
| 0,1 | 25 | 35 | 86 | 2,0 |
| 1,0 | 10 | 36 | 41 | 1,7 |
| 1,0 | 25 | 82 | 78 | 1,8 |
| 2,0 | 25 | 77 | 77 | 1,9 |
| 5,0 | 10 | 20 | 33 | 1,6 |
| 10,0 | 10 | 20 | 26 | 1,7 |
| 10,0 | 25 | 80 | 78 | 1,8 |

(1) bestimmt durch Gravimetrie nach Ausfällung des Polymers in kaltem Methanol.

(2) bestimmt durch SEC in THF im Vergleich zu einer Polystyrolkalibrierung, umgerechnet auf eine absolute Basis durch Verwendung einer Universalkalibrierung ($K_{PS}$ = 1,25·10$^{-2}$, $a_{PS}$ = 0,717, $K_{PLA}$ = 5,49·10$^{-2}$, $a_{PLA}$ = 0,639).

Im Gegensatz hierzu wird bei Erhöhung von (m) eine Reduktion des möglichen Molekulargewichts und der möglichen Monomerumwandlung beobachtet. Wird das Verhältnis von Triphenylphosphin zu Zinn unter 1 erniedrigt, so nimmt die Polymerisationsgeschwindigkeit drastisch ab.

Beispiel 6: Abhängigkeit der Polymerdegradation von der Katalysatorzusammensetzung.

Thermogravimetrische Messungen wurden mit Poly-(L-Lactiden) durchgeführt, die mit unterschiedlichen Katalysatorkombinationen bei einem anfänglichen molaren Verhältnis zwischen Katalysator und Monomer von 1000 und einer Polymerisationstemperatur von 180°C polymerisiert wurden (Tabelle 5). Hierzu wurde ein TGA TA51 Analysegerät unter Luftstrom benutzt (Heizrate = 10K/min bzw. isotherme Temperatur = 210°C).

Tabelle 5:

| Einfluß der Katalysator-Zusammensetzung auf die thermische Stabilität (Polymerisationsbedingungen: $[L\text{-}La]_0/$ $[Metall]=1000$ bei 180°C; Oct: 2-ethylhexanoat). | | | | | |
|---|---|---|---|---|---|
| Katalysator | Polym. Zeit [h] | $M_n \, 10^{-3}$[1] | $M_w/M_n$[1] | Max. Zers.[2] Temp.[°C] | Gew.-verlust [Gew.-% $min^{-1}10^3$][3] |
| $Sn(Oct)_2$* | 1,0 | 87 | 2,0 | 290 | 260 |
| $Sn(Oct)_2 \cdot P(Ph)_3$ | 0,25 | 120 | 1,7 | 297 | 1070 |

(1) Zahlenmittleres Molekulargewicht und Molekulargewichtsverteilung, bestimmt mittels SEC in $CHCl_3$.

(2) Maximale Zersetzungstemperatur, bestimmt mittels TGA aus dem Wendepunkt der Funktion aus Temperatur und Gewichtsverlust unter Luftatmosphäre (Heizrate = 10K/min).

(3) Gewichtsverlust, bestimmt mit TGA aus der Steigung des linearen Teils der zeitabhängigen Funktion des Gewichtsverlusts bei 210°C unter Luftatmosphäre.

* nicht erfindungsgemäß

Das Auftreten von Depolymerisationsreaktionen nimmt mit steigender Reaktivität des Katalysatorsystems bezüglich der Ringöffnungspolymerisation zu.

Beispiel 7: Abhängigkeit der Abbaurate von Poly(L-Lactid) vom anfänglichen molaren Verhältnis zwischen Monomer und dem äquimolaren Komplex Sn-bis(2-ethylhexanoat)-Triphenylphosphin.

Die thermische Stabilität von Poly(L-Lactid) wurde als Funktion des anfänglichen molaren Verhältnisses (R) von Monomer zum Snbis(2-ethylhexanoat)-Triphenylphosphin-Komplex untersucht (Tabelle 6). Mit zunehmendem molaren Verhältnis von Monomer zum Katalysator/Cokatalysator-Komplex sind die entsprechenden Polyester stabiler.

Tabelle 6:

| Abhängigkeit der thermischen Stabilität von Poly-(L-Lactid) vom anfänglichen molaren Verhältnis zwischen Monomer und Sn-bis(2-ethylhexanoat)-Triphenylphosphin-Komplex (Polymerisationstemperatur 180°C). | | | |
|---|---|---|---|
| R | Polym. t [min] | MDT[°C][1] | Gewichtsverlust [Gew.-%$min^{-1} \cdot 10^3$][2] |
| 1000 | 18 | 297 | 1070 |
| 5000 | 45 | 317 | 180 |
| 7500 | 60 | 345 | 90 |
| 10000 | 120 | 357 | 50 |

(1) MDT=maximale Zersetzungstemperatur, definiert durch den Wendepunkt der temperaturabhängigen Gewichtsverlustfunktion bei einer Heizrate von 10K/min unter Luftatmosphäre.

(2) Bestimmt aus einer TGA-Isothermen als Steigung des linearen Bereichs der zeitabhängigen Gewichtsverlustfunktion bei 210°C unter Luftatmosphäre.

Beispiel 8: Einfluß von verschiedenen Stabilisatoren auf die thermische Stabilität von Polylactiden, die Snbis(2-ethylhexanoat)-Triphenylphosphin enthalten.

IRGANOX MD 1010 von Ciba Geigy (Tetrakis(methylen 3-(3',5'-di-t-butyl-4'-hydroxy(phenyl)proprionat)methan), ULTRANOX von GE Speciality Chemicals (Bis(2,4-di-t-butylphenyl)pentaerythrioldiphosphit) und Mischungen dieser beiden wurden als Stabilisatoren und/oder Metalldesaktivatoren eingesetzt. Außerdem wurden auch die Hydroxyl-Kettenend-gruppen durch Veresterung verändert. Es wurde ein amorphes Poly(L,L-Lactid-co-meso-Lactid) Stereocopolymer (92:8), das als Katalysator einen äquimolaren Sn-bis(2-ethylhexanoat)/Triphenylphosphin-Komplex mit $[La]_0/[Sn] = 5000$ umfaßt, in Lösung modifiziert, d.h. esterifiziert oder mit Stabilisatoren und/oder Desaktivatoren versetzt und bei 60°C unter reduziertem Druck 24 Stunden lang getrocknet. Die Polymerisation wurde in der Schmelze bei 180°C durchgeführt. Thermogravimetrische Untersuchungen wurden mit einem TGA TA51 Analysator unter konstanten Luftstrom bei einer Heizrate von 10 K/min und bei einer isothermen Temperatur von 210°C durchgeführt.

Tabelle 7 gibt die thermische Stabilität des Polylactids in Abhängigkeit der vorgenommenen Modifizierungen wieder. Mit Ausnahme von Eintrag 5 wird ein einstufiger thermischer Abbau beobachtet. Acetylisierung und Esterifikation der Hydroxyl-Endgruppen des Polylactids durch Bernsteinsäureanhydrid bewirken keinen wesentlichen Anstieg der thermischen Stabilität (Eintrag 2 und 3). Ebenfalls sind IRGANOX und IRGANOX-reiche Stabilisator-Mischungen für dieses Polylactid nicht effektiv. Dagegen nimmt die Degradationsrate auf ein akzeptables Niveau mit ULTRANOX als Hauptanteil einer Stabilisatormischung ab (Gewichtsverlust < 17% $min^{-1} \cdot 10^3$ oder 1% während der ersten Stunde). ULTRANOX stört die Lactidpolymerisation, die durch Sn(II) basierende Katalysatoren katalysiert wird, nicht. Daher kann ULTRANOX schon zu Anfang der Ringöffnungspolymerisation zugegeben werden (vgl. Beispiel 9)

Tabelle 7:

| TGA-Messungen von modifizierten Polylactiden, die einen äquimolaren Sn-bis(2-ethylhexanoat)/ Triphenylphosphin-Komplex mit einem anfänglichen molaren Monomer - Zinn-Verhältnis von 5000:1 enthalten. | | | | |
| --- | --- | --- | --- | --- |
| Eintrag | Veränderung | MDT[°C][1] | $T_{95}$[°C][2] | Gewichtsverlust [Gew.-% $min^{-1}$ $10^3$] [3] |
| 1 | keine | 350 | 283 | 50 |
| 2 | PLA-O-CO-(CH_2)_2-COOH | 325 | 282 | 50 |
| 3 | PLA-O-CO-CH_3 | 343 | 292 | 15 |
| 4 | 1% IRGANOX | 362 | 286 | 30 |
| 5 | 0,75% IRGANOX, 0,25% ULTRANOX | 295 und 374 | 294 | 35 |
| 6 | 0,5% IRGANOX, 0,5% ULTRANOX | 374 | 344 | 20 |
| 7 | 0,25% IRGANOX, 0,75% ULTRANOX | 370 | 339 | 10 |
| 8 | 1% ULTRANOX | 366 | 334 | 10 |

(1) MDT=maximale Zersetzungstemperatur, definiert durch den Wendepunkt des temperaturabhängigen Gewichtsverlustes bei einer Heizrate von 10 K/min unter Luftatmosphäre.

(2) $T_{95}$ = Temperatur, die einem Gewichtsverlust von 5 Gew.-% in der temperaturabhängigen Gewichtsverlustkurve bei einer Heizrate von 10K/min unter Luftatmosphäre entspricht.

(3) Mit Hilfe einer TGA-Isothermen aus der Steigung des linearen Teils der zeitabhängigen Gewichtsverlustkurve bei 210°C unter Luftatmosphäre bestimmt.

Beispiel 9 (nicht erfindungsgemäß): Einfluß von ULTRANOX auf die Polymerisationskinetik und die thermische Stabilität von Polylactid, hergestellt mit Sn-bis(2-ethylhexanoat).

Die kinetischen Versuche wurden in verschlossenen Glasampullen bei 180°C mit einem anfänglichen molaren Monomer Sn-bis(2-ethylhexanoat)-Verhältnis von 1000 und 1 Gewichts-% ULTRANOX ausgeführt. Maximale Monomerumwandlungsgrade und Molekulargewichte werden nach 55 Minuten erreicht, wobei diese unabhängig von der Zugabe von ULTRANOX zu Sn-bis(2-ethylhexanoat) sind. Um die Effektivität von ULTRANOX als Stabilisator zu bestimmen, wurden thermogravimetrische Messungen mit Poly-(L-Lactid)-Proben, die unterschiedliche Mengen ULTRANOX enthalten und mit einem anfänglichen molaren Monomer-Zinn Verhältnis von 1000:1 polymerisiert wurden, ausgeführt. In der Anwesenheit von solch großen Mengen Sn(II)-Katalysator kann auch die Zugabe von größeren Mengen UITRANOX das Auftreten von Transesterifikationsreaktionen nicht verhindern (Tabelle 8).

Tabelle 8:

| Einfluß des ULTRANOX-Gehalts auf die thermische Stabilität von Polylactid (Polymerisationsbedingungen: $[L-La]_0$/ [Sn]= 1000 bei 180°C für 1 h) | | | |
| --- | --- | --- | --- |
| ULTRANOX-Anteil [%] | $T_1$[°C][1] | $T_2$[°C][1] | Gewichtsverlust nach 1h [Gew.-%][2] |
| 0,00 | 290 | - | 17 |
| 0,25 | 290 | - | 37 |
| 0,5 | 274 | 359 | 41 |
| 1,0 | 283 | 366 | 58 |

(1) $T_1, T_2$= Wendepunkte der temperaturabhängigen Gewichtsverlustkurve bei einer Heizrate von 10K/min unter Luftatmosphäre.

(2) Gewichtsverlust nach 1h, bestimmt mittels TGA bei einer isothermen Temperatur von 210°C unter Luftatmosphäre.

Bei einem ULTRANOX-Anteil kleiner als 0,25% wurde ein einstufiger Gewichtsverlust beobachtet. Bei höheren ULTRANOX Anteilen ist die thermogravimetrische Messung durch einen zweistufigen Gewichtsverlust gekennzeichnet. Eine deutliche Verschiebung der beiden Wendepunkte wurde bei Erhöhung der ULTRANOX-Menge beobachtet. Die Erhöhung des ULTRANOX Anteils erhöht den Polymergewichtsverlust, hier ausgedrückt als Gewichtsverlust nach 1 Stunde. Basierend auf den kinetischen Anforderungen an einen Einstufenpolymerisationsprozeß und der Notwendigkeit einer ausreichenden Schmelzestabilität der resultierenden Polymere kann keine Balance zwischen der katalytischen Aktivität von Snbis(2-ethylhexanoat) gegenüber der Polymerisation und der Depolymerisation gefunden werden.

Beispiel 10: Einfluß der Moderatoren 2-Ethylhexanoat und Hexansäure auf den Verlauf der Lactidpolymerisation.

Verschiedene Mengen der Moderatoren 2-Ethylhexanoat (Oct) und Hexansäure (HS), die zuvor 48h über BaO und 48h über $MgSO_4$ getrocknet wurden, wurden zu einer Mischung aus L-Lactid und einem äquimolaren Sn-bis (2-ethylhexanoat)/Triphenylphosphin-Komplex mit einem anfänglichen molaren Monomer-Zinn-Verhältnis von 5000:1 zugegeben. Die Polymerisationen wurden unter Rühren in verschlossenen Glasampullen bei 180°C 1,77 h lang durchgeführt. Die Monomerumwandlung und die molekularen Parameter der entstehenden Polymere sind in Tabelle 9 aufgeführt.

Tabelle 9:

| Abhängigkeit des Verlaufs der Lactidpolymerisation von der Zugabe eines Alkohols (Oct) und einer Carboxylsäure (HS) als Moderator. $(Sn(Oct)_2 \cdot P(Ph_3)$ als Katalysator mit $[L\text{-}LA]_0/[Sn]$ = 5000:1 bei 180°C für 1,77h) | | | | |
|---|---|---|---|---|
| Additiv | $[Add]_0/[Sn]$ | $M_n \cdot 10^{-3(1)}$ | $M_w/M_n^{(1)}$ | Umsatz [Gew.-%][2] |
| Oct | 1 | 174 | 1,5 | 100 |
|  | 2 | 162 | 1,5 | 99 |
|  | 5 | 123 | 1,6 | 99 |
|  | 10 | 103 | 1,6 | 99 |
| HS | 1 | 99 | 1,8 | 100 |
|  | 2 | 95 | 1,8 | 98 |
|  | 5 | 84 | 1,9 | 89 |
|  | 10 | 90 | 1,7 | 75 |

(1) bestimmt mittels SEC in $CHCl_3$.

(2) bestimmt mittels FTIR-Spektroskopie in Bezug auf eine Monomer-Polymer-Kalibrierung.

Bei Zugabe eines primären Alkohols zum Reaktionsmedium wirkt dieser als Initiator für die L-Lactidpolymerisation. Werden steigende Anteile von Hexansäure zur Reaktionsmischung zugegeben, erniedrigt sich die Monomerumwandlung bei konstanter Reaktionszeit drastisch, während die Molekulargewichtsverteilung nur schwach beeinflußt wird.

Beispiel 11: Benötigte Monomeren-Reinheit.

Der Einfluß der Monomeren-Reinheit auf das Molekulargewicht des gewonnenen Polylactids und auf die Kinetik der Polymerisation wurden untersucht. Die Polymerisation wurde in geschlossenen Glasampullen bei 180°C für ein anfängliches molares Verhältnis von Monomer zum Sn-bis(2-ethylhexanoat)/Triphenylphosphin-Komplex von 5000:1 und unterschiedlichen Lactid-Reinheiten durchgeführt. Die Reinheit des Lactids wurde durch potentiometrische Titration bestimmt. Bei Abnahme der Lactid-Reinheit reduziert sich das Molekulargewicht und die Polymerisationszeit leicht. Zum Beispiel erreicht das Molekulargewicht 245.000 g/mol bei einem verbleibenden Säuregehalt von 2 mequ/ kg und 79.000 g/mol bei einem Säuregehalt von 16 mequ/kg.

Beispiel 12: Zeit- und Temperaturabhängigkeit der molekularen Parameter der gewonnenen Polymere.

Tabelle 10 zeigt die Zeitabhängigkeit des Molekulargewichts und der Molekulargewichtsverteilung bei Erwärmung von einem amorphen Poly(L,L-Lactid-co-meso-Lactid) Stereocopolymer (92:8) auf unterschiedliche Temperaturen unter Luftatmosphäre. Die Molekulargewichtsparameter wurden mittels SEC in $CHCl_3$ bestimmt, mit Bezug auf eine Polystyrol Kalibrierung berechnet und anschließend mittels einer Universalkalibrierung auf eine absolute Basis korrigiert. Die Messungen wurden an auspolymerisierten Proben durchgeführt, die 1 Gewichts-% ULTRANOX und einen äquimolaren Sn-bis(2-ethylhexanoat)/Triphenylphosphin-Komplex mit einem anfänglichen molaren Verhältnis zwischen Monomer und Zinn von 5000:1 enthalten. Bei Temperaturerhöhung nehmen Molekulargewichtsverlust und Molekulargewichtsverteilung bei gleicher Heizzeit leicht zu. Eine Bildung von zyklischen Oligomeren konnte während einer Heizzeit von 1 h nicht festgestellt werden.

Tabelle 10:

| Zeit- und Temperaturabhängigkeit des Molekulargewichts eines amorphen auspolymerisierten Polylactids (Polymer-Zusammensetzung: Poly(L,L-La-comeso-La) (92:8), $[La]_0/[Sn]=5000$, Katalysator $Sn(Oct)_2 \cdot P(Ph)_3$, 1 Gewichts-% ULTRANOX). | | | |
|---|---|---|---|
| Temperatur T [°C] | Zeit t [min] | $100 \cdot M_n(t)/M_n(t_0)$ | $M_w/M_n$ |
| 180 | 15 | 96 | 2,0 |
| | 30 | 80 | 2,3 |
| | 60 | 77 | 2,4 |
| 190 | 15 | 86 | 2,3 |
| | 30 | 79 | 2,5 |
| | 60 | 75 | 2,5 |
| 210 | 15 | 84 | 2,2 |
| | 30 | 77 | 2,4 |
| | 60 | 70 | 2,6 |

Beispiel 13: Thermische und physikalische Eigenschaften einiger Copolymere von L-Lactid.

Tabelle 11 zeigt die thermischen und physikalischen Eigenschaften einiger typischer Lactid-basierender Polymere. Lactidstereocopolymere wurden durch die Polymerisation mit einem äquimolaren Sn-bis(2-ethylhexanoat)/Triphenylphosphin-Komplex bei 180°C in verschlossenen Glasampullen für ein anfängliches molares Verhältnis zwischen Monomer und Zinn von 1000:1 und einer Reaktionszeit von 0,5 h unter ständigem Rühren hergestellt. Die Copolymerisation von L-Lactid und ε-Caprolacton wurde entsprechend für ein Monomer-Zinn-Verhältnis von 5000:1 und einer Polymerisationszeit von 4h durchgeführt. Nach der Entfernung von Zinn-Rückständen durch Lösungsmittelextraktion (vgl. Beispiel 1) wurden die Proben geschmolzen und 5 min. unter einem Druck von 15 bar bei 190°C im Fall von semi-kristallinen und bei 170°C im Fall von amorphen Lactid-basierenden Polymeren zu 2mm dicken Platten gepresst. Mechanische Eigenschaften wurden mittels eines Zugversuchs nach ASTM D-638 bei Raumtemperatur mit einem ADAMEL LMOMARGY DY-24 Apparat ermittelt (Prüfgeschwindigkeit 20 mm/min). Kalorimetrische Messungen wurden auf einem DSC/ATD DuPont 9000 Gerät unter konstantem Stickstoffstrom bestimmt (Heizrate = 20K/min, 2. Heizkurve wurde nach schneller Abkühlung bestimmt).

Tabelle 11:

| Einfluß der Copolymerisierung auf die thermischen und physikalischen Eigenschaften einiger Copolymere von L-Lactid ($PLA_X C_Y$: X=Gewichts-% der L-Milchsäure Einheiten, C=Comonomer und Y= Gewichts-% der Comonomer-Einheiten). | | | | | | | | | |
|---|---|---|---|---|---|---|---|---|---|
| Copolymer | (1)$T_g$ [°C] | (2) $T_m$ [°C] | $\Delta H$[J/g] | $M_n \cdot 10^{-3(1)}$ | (3) $M_w/M_n$ | (4) $\tau_y$ [MPa] | (5)$\tau_b$ [MPa] | (6) $\varepsilon_y$ [%] | (7) $\varepsilon_b$ [%] |
| $PLA_{100}$ | 65 | 182 | 22,5 | 270 | 1,9 | - | 7 | - | 4,7 |
| $PLA_{92,5}$ | 62 | - | - | 261 | 2,0 | 72 | 6 | 3,5 | 4,7 |
| $PLA_{98,2}CL_{1,8}$ | 62 | 164 | 2,0 | 112 | 1,8 | - | 69 | - | 4,3 |
| $PLA_{94,3}CL_{5,7}$ | 57 | 154 | 0,2 | 177 | 1,5 | 69,5 | 64,0 | 4,6 | 4,9 |
| $PLA_{86,9}CL_{13,1}$ | 46 | - | - | 138 | 1,8 | 62,4 | 56 | 3,5 | 4,5 |
| $PLA_{78,5}CL_{21,5}$ | 36 | - | - | 153 | 1,7 | 25,4 | 33,8 | 4,0 | 303,0 |
| $PLA_{71,5}CL_{28,5}$ | 16 | - | - | 135 | 1,8 | - | 39,2 | - | 922,0 |

(1) Temperatur des Glasübergangs

(2) Schmelztemperatur

(3) Molekulargewicht und Molekulargewichtsverteilung wurden mittels SEC in $CHCl_3$ mit einer Polystyrol-Kalibrierung bestimmt.

(4) Spannung bei Fließen

(5) Spannung bei Bruch

(6) Dehnung bei $\tau_y$

(7) Dehnung bei $\tau_b$

Beispiel 14: Erfindungsgemäßes Verfahren für die kontinuierliche Polymerisation durch einstufige reaktive Extrusion von Poly(L-Lactid) in einem gleichsinnig drehenden, dicht kämmenden Zwei-Schneckenextruder (Polymerisationsbedingun-gen [L-La]$_0$/[Sn]=5000, Sn(Oct)$_2 \cdot$P(Ph)$_3$ (1:1) als Katalysator).

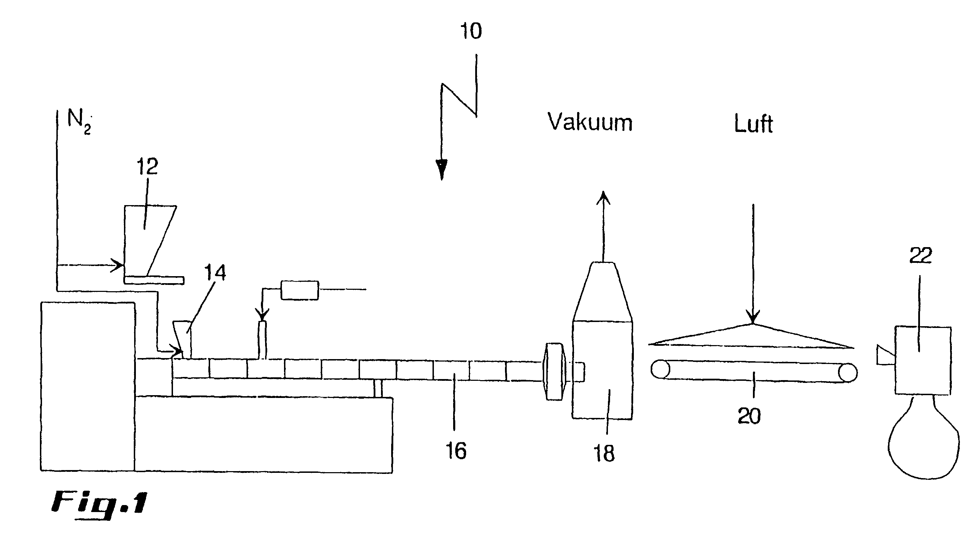

Nachfolgend wird ein Anlagenschema der verfahrenstechnischen Anlage 10 wie in Figur 1 dargestellt für eine kontinuierliche Polymerisation durch einstufige reaktive Extrusion von Poly(L-Lactid) beschrieben. Es wurde ein gleichsinnig drehender, dicht kämmender Zwei-Schneckenextruder 16 der Firma Berstorff (ZE 25) als Extrusionsmaschine ausgewählt. Als Vorbereitung wurden 2 kg L-Lactid in einen großen Glaskolben eingefüllt, der zuvor ausgeflammt und zweimal mit Stickstoff geflutet wurde. Mit Hilfe einer Spritze mit einer Nadel aus rostfreiem Stahl wurde das in Toluol aufgelöste Katalysator/Cokatalysator-System durch ein Gummi-Septum, welches den Glaskolben verschließt, dem L-Lactid zugegeben. Unter stetigem Schütteln wurde dann das Toluol bei erniedrigtem Druck verdampft und das Katalysator/Cokatalysator-System gleichmäßig im L-Lactid verteilt. Diese so vorpräparierte Mischung diente als Ausgangsbasis für die reaktive Extrusion. Die vorbereitete Monomer-Katalysator/Cokatalysator-Mischung wird in eine gravimetrische Dosierung 12 mit Pulverschnecken eingebracht, die von unten im Gegenstrom mit Stickstoff gespült wird, um unnötigen Kontakt des Monomeren mit feuchter Luft zu vermeiden. Als Massendurchsatz für die Polymerisation wurde 700g/h gewählt, d.h. die gravimetrische Dosierung wirft 700g/h der Monomer-Katalysator/Cokatalysator-Mischung in einen Einfülltrichter 14 des Zwei-Schneckenextruders 16 ab. Dieser Einfülltrichter 14 wird ebenfalls von unten im Gegenstrom mit getrocknetem Stickstoff gespült.

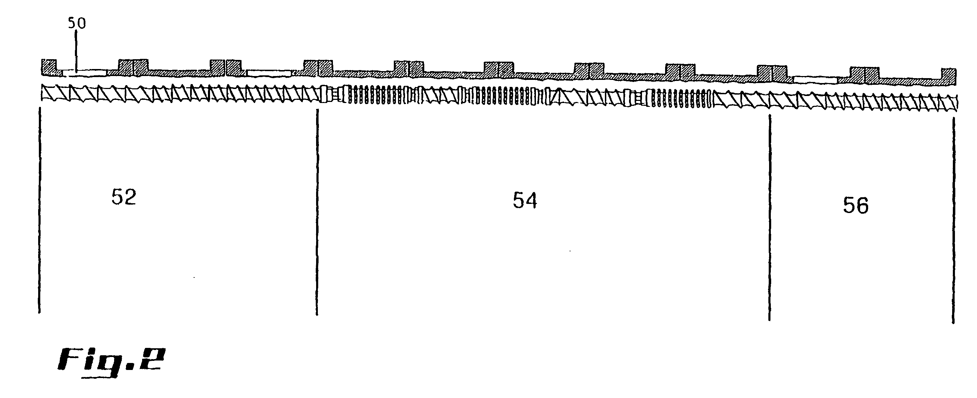

In Figur 2 ist das Schneckenkonzept, welches in diesem Beispiel verwendet wurde, dargestellt. Der verwendete Zwei-Schneckenextruder 16 hat einen Schneckendurchmesser von 25 mm und ein Längen/Durchmesser-Verhältnis von 48 und gehört damit zu den längeren Zwei-Schneckenextrudern, die aufgrund ihrer Länge für reaktive Aufbereitung und damit auch für die angestrebte Polymerisation bevorzugt werden. Der Zwei-Schneckenextruder 16 verfügt sowohl über eine modular aufgebaute Schnecke und ist aus mehreren Gehäusen 50 modular aufgebaut. Die ersten beiden Gehäuse der sich mit 100 Umdrehungen/Minute drehenden Schnecke sind nicht beheizt, so daß das feste Monomere in den Elementen mit großem Förderwinkel relativ schnell in die Maschine hineingefördert wird. Das dritte Gehäuse dient bei kleineren Förderwinkeln der Schneckenelemente und erhöhter Temperatur zum Aufschmelzen der Ausgangsstoffe. In diesem Bereich 52 des Zwei-Schneckenextruders findet noch keine nennenswerte Reaktion statt, da die Temperatur zur raschen Polymerisation noch nicht ausreichend ist. Ab dem vierten Gehäuse bis zu dem auf das Entgasungsaggregat 18 hin ausgerichteten Ende der Extrusionsmaschine ist diese auf eine Gehäusetemperatur von 180°C erwärmt. Die Ausgangsstoffe werden im Innern der Maschine nicht diese Temperatur aufweisen, sondern vielmehr wird dort ein Temperaturspektrum vorherrschen, welches in einem Bereich liegt, in dem akzeptable Polymerisationsbedingungen vorhanden sind. In dem nun folgenden Schneckenbereich findet die Vorpolymerisation statt. Dazu sind drei Kombinationen aus Scher- und Mischteilen eingebaut. Jede dieser Kombinationen beginnt mit einem Knetblock, der durch thermisch-mechanischen Energieeintrag die thermischen Polymerisationsbedingungen verbessert. Die anschließenden Zahnscheiben arbeiten wie gegeneinander schneidende Messer und bewirken, daß der Materialstrom in immer neue Teilströme zerlegt wird und somit neue Nachbarschaften in der Polymerschmelze geschaffen werden. Diese Scher- und Mischkombinationen sind jeweils gegen den Strom abgesperrt. Je weiter die Polymerisation fortgeschritten ist, desto kräftiger wurde die Absperrung gewählt - zuerst mit einem gegenförderndem Knetblock, dann mit einer Kombination aus gegenförderndem Knetblock und gegenförderndem Schneckenelement und schließlich durch ein Blisterelement, welches den stärksten Gegenhalt erzielt. Diese Schmelzebremsen haben den Sinn, das Material möglichst lange in den Mischelementen zu halten, den Füllgrad in diesen zu erhöhen und damit die Mischwirkung zu verbessern. Bei Fortschreiten der Polymerisation wird die Schmelze viskoser und desto wichtiger ist die innige Durchmischung für den Polymerisationsprozeß, da die potentiellen Partner für eine Polymerisation seltener werden. Deshalb werden die rückstauenden Elemente in jeder Mischkombination verschärft, um eine bessere Mischwirkung zu erzielen.

Nach einer letzten Entspannung wird Druck für die Überwindung des Düsenwiderstandes aufgebaut. In einem Schneckenbereich 56 sind Elemente mit flacheren Förderwinkeln und größerem Gangvolumen angeordnet. Ein Druckaufbau ist aber nur möglich, wenn das enthaltene Material eine nennenswerte Viskosität besitzt. Hier am Ende der Schnecke stellt sich nun ein Gleichgewicht ein, das wesentlich vom Widerstand der Düse abhängt. Hier findet unter Druck (30 bis 150 bar) und unter thermischmechanischem Energieeintrag die Auspolymerisierung statt, im Idealfall bis zum thermodynamischen Gleichgewicht. Hierbei ist zu beachten, daß dieses thermodynamische Gleichgewicht aufgrund des erhöhten Druckes und des thermisch-mechanischen Energieeintrags nicht notwendigerweise dasselbe ist wie in einem Versuch mit denselben Startbedingungen in einer Glasampulle. Das fertige Polymer tritt aus einer Kreisdüse aus und kann, falls der Monomergehalt noch über 1 Gewichts-% liegt, mit dem anschließenden Entgasungsaggregat 18 von dem noch enthaltenen Monomer bei niedrigem Druck befreit werden. Das so ausgeformte noch schmelzflüssige hochviskose Polymere wird auf einem Förderband 20 mit Luftkühlung abgekühlt und in einem anschließenden Granulierer 22 granuliert und zur Weiterverarbeitung abgesackt. In Tabelle 12 sind zwei Poly(L-Lactide) als Vergleich nebeneinandergestellt. Das eine (Tabelle 12, Eintrag 2) ist nach der beschriebenen Verfahrenstechnik bei einer Gehäusetemperatur von 180°C polymerisiert, das andere (Tabelle 12, Eintrag 1) ist bei 180°C nach Beispiel 1 in der Glasampulle polymerisiert.

Tabelle 12:

| Vergleich zwischen in der Glasampulle und in reaktiver Extrusion auf einem gleichsinnig drehenden, dicht kämmenden Zwei-Schneckenextruder mit einem äquimolaren $Sn(Okt)_2 \cdot P(Ph)_3$-Komplex im Verhältnis $[L-La]_0/[Sn]$ = 5000 bei 180°C hergestellten Poly(L-Lactid). | | | | | |
|---|---|---|---|---|---|
| Eintrag | Verfahren | $M_n \cdot 10^{-3}$[1] | $M_w/M_n$[1] | Umwandlung [%] [2] | Zeit [min] für Umwandlung |
| 1 | Glasampulle | 246 | 1,9 | 98,5 | 40 min |
| 2 | reaktive Extrusion | 91,1 | 1,8 | 99 | < 7 min[3] |

(1) Zahlenmittleres Molekulargewicht und Molekulargewichtsverteilung, ermittelt mittels SEC in $CHCl_3$ bei 35°C relativ zu einer PS-Kalibrierung.

(2) Die Monomerumwandlung wurde mittels FTIR-Spektroskopie ermittelt.

(3) Abgeschätzt aus maximaler Verweilzeit in der Extrusionsmaschine.

Der Vergleich zweier auf so unterschiedliche Arten hergestellter Polymere ist nur schwer möglich, da, obwohl die gleichen Startbedingungen gewählt wurden, die Reinheit in einem Extruder nie diejenige in einer Glasampulle erreicht. Dies führt zu einer deutlichen Reduktion des erzielten Molekulargewichts. Bei nahezu gleicher Monomerumwandlung liegt die Zeit, die für die komplette Umwandlung benötigt wurde, in der Glasampulle bei 40 Minuten, während sie bei reaktiver Extrusion um mehr als den Faktor 5 reduziert wurde. Dies ist im wesentlichen auf die innige Durchmischung während des Polymerisationsprozesses, aber auch auf den thermisch-mechanischen Energieeintrag in das Material zurückzuführen.

Beispiel 15: Kontinuierliche Polymerisation durch einstufige reaktive Extrusion von schmelzestabilem Poly(L-Lactid) in einem gleichsinnig drehenden, dicht kämmenden Zwei-Schneckenextruder.

Die Polymerisations- und verfahrenstechnischen Bedingungen entsprechen denen aus Beispiel 14. Jedoch wird der Mischung aus L-Lactid und dem äquimolaren Sn-bis(2-ethylhexanoat)/Triphenylphosphin-Komplex mit $[L-La]_0/[Sn]$=5000 nun noch 1 Gewichts-% ULTRANOX als Stabilisator zugegeben. Der Massedurchsatz beträgt 700g/h, die Gehäusetemperaturen 180°C und die Drehzahl 100 U/min. Die Analyseergebnisse des so erzeugten schmelzestabilen Polymer sind in Tabelle 13 mit denjenigen des in Beispiel 14 erzeugten, nicht stabilisierten Polymer verglichen.

Tabelle 13:

| Vergleich von in reaktiver Extrusion polymerisierten Poly(L-Lactiden) mit und ohne Stabilisator. (Polymerisationsbedingungen: $Sn(Okt)_2 \cdot P(Ph)_3$ im Verhältnis $[L-La]_0/[Sn]$ = 5000, 180°C Gehäusetemperatur, 100 U/min Drehzahl). | | | |
|---|---|---|---|
| Stabilisator | $M_n \cdot 10^{-3}$[1] | $M_w/M_n$[1] | Umwandlung[%][2] |
| | | | |
| keiner | 91,1 | 1,8 | 99 |
| 1 Gew.-% ULTRANOX | 100,4 | 1,6 | 99 |

(1) Zahlenmittleres Molekulargewicht und Molekulargewichtsverteilung wurden mittels SEC in $CHCl_3$ bei 35°C relativ zu einer PS-Kalibrierung ermittelt.

(2) Die Monomerumwandlung wurde mit FTIR-Spektroskopie ermittelt.

Auffallendstes Merkmal des gewonnenen schmelzestabilen Polymers mit 1 Gew.-% ULTRANOX ist die deutlich geringere und hellere Färbung, die auf deutlich geringere Depolymerisationsreaktionen schließen läßt. Sowohl das stabilisierte als auch das nicht stabilisierte Polymer zeigen 99% Monomerumwandlung, d.h. die Polymerisation ist abgeschlossen und eine Entgasung des gewonnenen Polymers nicht mehr nötig. Das stabilisierte Polymer besitzt ein höheres zahlenmittleres Molekulargewicht und eine schmälere Molekulargewichtsverteilung, d.h. ohne Stabilisator finden in der Extrusionsmaschine bereits vermehrt intermolekulare Transesterifikationsreaktionen statt, die bei Zugabe von 1 Gew.-% ULTRANOX deutlich reduziert werden.

Beispiel 17: Verfahrenstechnisches Konzept einer In-line-rheometrischen Viskositätsbestimmung des auspolymerisierten Polymers aus einer einstufigen reaktiven Extrusion und Regelung der Polymerisation durch Veränderung des Düsenwiderstands und/oder der Zugabemenge von Moderatoren, die das Molekulargewicht beeinflussen.

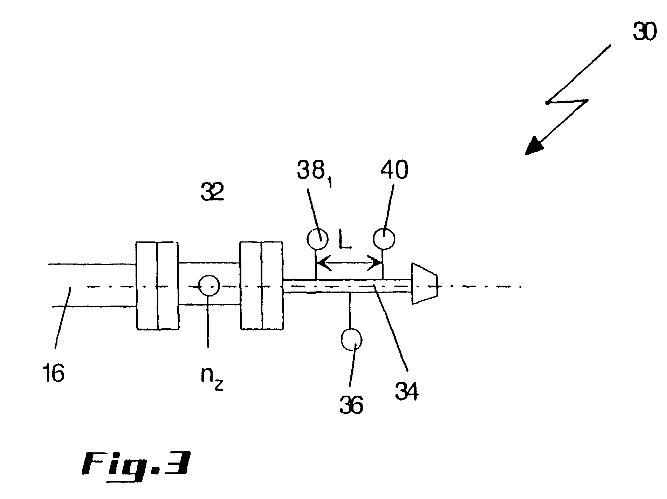

Die Düse, die in Beispiel 14 den Zwei-Schneckenextruder 16 beschließt wird durch eine Regelkombination ersetzt. In Figur 3 ist hierzu der Düsenbereich 30 des verwendeten Zwei-Schneckenextruders 16 wiedergegeben. Danach gelangt das Polymer aus dem Zwei-Schneckenextruder 16 in eine Zahnradpumpe 32, deren Drehzahl stufenlos mit einem Potentiometer regelbar ist. Diese hat im stationären Zustand denselben Polymerdurchsatz wie der Zwei-Schneckenextruder 16. Im Anschluß an die Zahnradpumpe befindet sich eine Flachschlitzkapillare 34 mit einem Temperatursensor 36 in der Nähe der Schmelze oder direkt in der Schmelze sowie zwei Druckmeßstellen 38 und 40. Über diese Druckmeßstellen kann der Druckabfall über der Kapillaren 34 bestimmt werden und damit die Wandschubspannung $\tau_W$ nach Gleichung 1 bestimmt werden.

$$\tau_W = h/2 \cdot (p_1 - p_2)/L \qquad \text{(Gleichung 1)}$$

wobei

$\tau_W =$   Wandschubspannung [Pa]

$h =$   Höhe der Flachschlitzkapillaren [mm]

$p_1, p_2 =$   Druck an den Meßstellen 38 und 40 [Pa]

$L =$   Abstand der Meßstellen 38 und 40 [mm]

Die zugehörige Schergeschwindigkeit $\gamma$ in der Flachschlitzkapillaren läßt sich aus dem bekannten Polymerdurchsatz und den Geometriedaten der Flachschlitzkapillaren 34 nach Gleichung 2 berechnen.

$$\dot{\gamma}_{app} = (6 \cdot C_Z \cdot n_Z)/(b \cdot h^2) \qquad \text{(Gleichung 2)}$$

wobei

$\dot{\gamma}_{app} =$   Schergeschwindigkeit innerhalb der Flachschlitzkapillaren 34 [$s^{-1}$]
$C_Z =$   Fördervolumen der Zahnradpumpe 32 pro Umdrehung [$cm^3$/U]
$n_Z =$   Drehzahl der Zahnradpumpe 32 [U/s]
$b =$   Breite der Kapillaren 34 [mm]
$h =$   Höhe der Flachschlitzkapillaren 34 [mm]

Durch die Schergeschwindigkeit und die Schubspannung ist bei einer bestimmten Temperatur ein Polymer mit bestimmter Viskosität gekennzeichnet. Damit kann der Polymerisationsprozeß bei Kenntnis des Molekulargewichts und der Molekulargewichtsverteilung geregelt werden.

Tritt zum Beispiel durch eine Störung innerhalb des Prozesses, sei es durch geringe Temperaturunterschiede oder durch geringe Monomerschwankungen, eine Erniedrigung des Molekulargewichts und damit der Viskosität auf, so äußert sich dies in einem geringeren Druckverlust innerhalb der Meßstrecke zwischen den Druckmeßstellen 38 und 40 der Flachschlitzkapillaren 34. Mit diesem Signal wird nun die Drehzahl $n_Z$ der Zahnradpumpe 32 angesteuert und ebenfalls leicht reduziert. Dadurch ist nun der Massenstrom, der durch die Zahnradpumpe 32 gefördert wird, kleiner als der vom Zwei-Schneckenextruder 16 geförderte Polymerdurchsatz. Dies wirkt sich in einer Erhöhung des Schmelzerückdrucks in dem Zwei-Schneckenextruder 16 und damit in einer längeren Reaktionszeit für das Polymer aus. Das Polymer polymerisiert zu höheren Molekulargewichten aus. Dies erhöht die Viskosität der Schmelze, was in einem Anstieg des Druckabfalls in der Flachschlitzkapillaren 34 und damit zum Ausgleich der Störung führt.

Als Alternative kann statt der Drehzahl der Zahnradpumpe 32 die Zugabemenge eines Moderators zur Molekulargewichtsbeeinflussung gesteuert werden, d.h. sollte sich die Viskosität und damit das Molekulargewicht des entstehenden Polymers reduzieren, wird die Zugabe des Moderators gedrosselt, so daß sich das Molekulargewicht und damit die Viskosität der Schmelze wieder auf das gewünschte Maß erhöht.

Beispiel 18: Verfahrenstechnisches Konzept einer on-line-FTIR-Messung zur Bestimmung des Monomerumsatzes im auspolymerisierten Polymer aus einer einstufigen reaktiven Extrusion und Regelung der Polymerisation durch Veränderung des Düsenwiderstands.

Bei einem verfahrenstechnischen Konzept nach Beispiel 14 kann analog zu Beispiel 17 das entstehende Polymer am Ende des Zweischneckenextruders 16 beim Austritt aus der Düse mittels FTIR-Spektroskopie vermessen werden. Im Gegensatz zu Beispiel 17, in dem zur Ermittlung der rheologischen Eigenschaften der ge-samte Polymermassenstrom verwendet wurde, wird für die Charakterisierung mittels FTIR-Spektroskopie nur ein sehr kleiner Teilstrom benötigt. Daher wird aus dem Polymerstrom kurz vor der Düse über einen Bypass ein kleiner Teilstrom entnommen, der über einen elektrisch beheizten Kanal einem IROS 100 Durchlicht FTIR-Spektrometer zugeleitet wird. Um die Monomerumwandlung mittels FTIR-Spektroskopie bestimmen zu können, wurde eine Kalibrierkurve vom Verhältnis [PLA]/[LA] gegen $A_{1323}/A_{935}$ aufgenommen. Dabei wurde das [PLA]/[LA]-Verhältnis mit SEC und $^1$HNMR-Spektroskopie ermittelt. Das Absorptionssignal bei 1323 cm$^{-1}$ wird einer Vibration zugeordnet, die sowohl im Polymer als auch im Monomer auftritt, während das schmale und monomodale Absorptions-Signal bei 935 cm$^{-1}$ für das Monomer charakteristisch ist.

Mit Hilfe dieser Kalibrierfunktion kann on-line der jeweilige Monomergehalt und damit der Monomerumsatz bestimmt werden. Ein hieraus ermitteltes Signal wird dann über einen Regelkreislauf zur Regelung des Düsenwiderstandes wie in Beispiel 17 beschrieben über die Drehzahlregelung der Zahnradpumpe 32 verwendet, die als Düse mit variablem Widerstand fungiert. Je nach Anforderung an die Qualität des Polymers sind somit unterschiedliche Regelstrategien mit unterschiedlichem Aufwand möglich, die auch untereinander kombinierbar (z.B. Beispiel 17 + Beispiel 18) sind.

**Patentansprüche**

1. Verfahren zur Herstellung von aliphatischen Polyestern und/oder Copolyestern mit einer Extrusionsmaschine, **dadurch gekennzeichnet, daß**

   1) in einer Polyreaktion mindestens ein Monomer aus der Gruppe der Lactide umgesetzt wird;
   2) in der Polyreaktion ein Reaktionsgemisch aus mindestens Sn-bis(2-ethylhexanoat) als Katalysator;
   3) und ferner mindestens Triphenylphosphin als Cokatalysator verwendet wird; und
   4) das Verfahren ein kontinuierlich geführter, einstufiger, reaktiver Extrusionsprozeß ist.

2. Verfahren nach Anspruch 1, **dadurch gekennzeichnet, daß** das Molverhältnis des Cokatalysators zum Katalysator im Bereich von 100:1 bis 1:100 gewählt ist.

3. Verfahren nach einem der Ansprüche 1 oder 2, **dadurch gekennzeichnet, daß** das Reaktionsgemisch einen Stabilisator umfaßt.

4. Verfahren nach Anspruch 3, **dadurch gekennzeichnet, daß** der Stabilisator insbesondere Organophosphite, phenolische Verbindungen oder Mischungen daraus umfaßt.

5. Verfahren nach einem der Ansprüche 3 oder 4, **dadurch gekennzeichnet, daß** der Stabilisator in einem Anteil von bevorzugt weniger als 2 Gewichtsanteilen auf 20 Gewichtsanteile Monomer enthalten ist.

6. Verfahren nach einem der Ansprüche 1 bis 5, **dadurch gekennzeichnet, daß** ein Moderator zur Kontrolle des Molekulargewichts in dem Reacktionsgemisch enthalten ist.

7. Verfahren nach einem der Ansprüche 1 bis 6, **dadurch gekennzeichnet, daß** das Reaktionsgemisch einen Füll- und/oder Verstärkungsstoff enthält.

8. Verfahren nach Anspruch 7, **dadurch gekennzeichnet, daß** der Füll- und/oder Verstärkungsstoff bevorzugt mit reaktiven Endgruppen zur Moderierung des Molekulargewichts des Polyesters und/oder Copolyesters versehen ist.

9. Verfahren nach einem der Ansprüche 1 bis 8, **dadurch gekennzeichnet, daß** das Molekulargewicht Mn des Polyesters und/oder Copolyesters zwischen 30.000 und 300.000 g/mol, bevorzugt zwischen 80.000 und 200.000 g/mol, liegt, und daß die Molekulargewichtsverteilung ≤2,0 ist.

**10.** Verfahren nach einem der Ansprüche 1 bis 9, **dadurch gekennzeichnet, daß** der Monomeranteil im Polymer weniger als 5 Gewichtsprozent, bevorzugt weniger als 2 Gewichtsprozent, beträgt.

**11.** Verfahren nach einem der Ansprüche 1 bis 10, **dadurch gekennzeichnet, daß** das Molverhältnis zwischen eingesetztem Monomer oder einer Mischung von Monomeren und der Katalysator-/Cokatalysator- Mischung mindestens 5.000:1 beträgt.

**12.** Verfahren nach einem der Ansprüche 1 bis 11, **dadurch gekennzeichnet, daß** das Monomer oder eine Mischung von Monomeren einen freien Säuregehalt von maximal 10 mequ/kg und einen Wassergehalt von maximal 200 ppm aufweist.

**13.** Verfahren nach einem der Ansprüche 1 bis 12, **dadurch gekennzeichnet, daß** in der Phase der Oligomerisierung ein Durchmischen und Homogenisieren der Mischung und in der Phase des Auspolymerisierens ein Druckaufbau mit thermisch- mechanischem Energieeintrag erfolgt.

**14.** Verfahren nach einem der Ansprüche 1 bis 13, **dadurch gekennzeichnet, daß** die temperierbaren Abschnitte der Extrusionsmaschine eine Temperatur in einem Bereich zwischen 100 und 230°C, bevorzugt zwischen 180 und 195°C, aufweisen.

**15.** Verfahren nach einem der Ansprüche 1 bis 14, **dadurch gekennzeichnet, daß**

1) in einem ersten Schritt die Ausgangsstoffe Monomere und Comonomere, Katalysatoren, Cokatalysatoren, Moderatoren, Stabilisatoren, Füll- und/oder Verstärkungsstoffe vermischt werden;
2) in einem zweiten Schritt diese Mischung der Extrusionsmaschine zudosiert wird;
3) in einem dritten Schritt das gewonnene Polymer kontinuierlich polymerisiert und ausgetragen wird; und
4) in einem vierten Schritt das gewonnene Polymer ausgeformt wird.

**16.** Verfahren nach Anspruch 15, **dadurch gekennzeichnet, daß** das gewonnen Polymer durch Kühlung verfestigt wird.

**17.** Verfahren nach einem der Ansprüche 15 oder 16, **dadurch gekennzeichnet, daß** die Kühlung des gewonnen Polymers bevorzugt über einem Förderband mit Luft erfolgt.

**18.** Verfahren nach einem der Ansprüche 15 bis 17, **dadurch gekennzeichnet, daß** das gewonnene Polymer bevorzugt in einem Granulierer zu Kunststoffgranulat ausgeformt wird.

**19.** Verfahren nach einem der Ansprüche 1 bis 18, **dadurch gekennzeichnet, daß** mittels einer in-line- oder on- line-Messung die Viskositat des Polymers und/oder durch eine in-line- oder online-infrarotspektroskopische Messung der Monomerumsatz des gewonnenen Polymers bestimmt wird.

**20.** Verfahren nach einem der Ansprüche 1 bis 19, **dadurch gekennzeichnet, daß** der verbleibende Monomergehalt im Polymer durch ein Entgasungsaggregat in der Extrusionsmaschine reduziert werden kann.

**Claims**

**1.** A process for manufacturing aliphatic polyesters and/or copolyesters using an extrusion machine, **characterised in that**

1) at least one monomer selected from lactides is converted during a polyreaction;
2) a reactive mixture comprising at least Sn- bis (2-ethylhexanoate) as catalyst in the polyreaction;
3) and further at least triphenyl phosphine as cocatalyst is used; and **characterised in that**
4) the process is carried out continuously as a one-stage reactive extrusion process.

**2.** The process according to claim 1, **characterised in that** the molar ratio of the cocatalyst to the catalyst is within the range of 100:1 to 1:100.

**3.** The process according to claim 1 or 2, **characterised in that** the reaction mixture comprises a stabiliser.

4.   The process according to claim 3, **characterised in that** the stabiliser comprises organophosphite, phenolic compounds or mixtures thereof.

5.   The process according to claim 3 or 4, **characterised in that** the stabiliser is added in a proportion of preferably less than 2 weight fractions for every 20 weight fractions of monomer.

6.   The process according to claims 1 to 5, **characterised in that** a moderator is added to the reactive mixture in order to control the molecular weight.

7.   The process according to claims 1 to 6, **characterised in that** the reactive mixture comprises a filler, a reinforcing agent or both.

8.   The process according to claim 7, **characterised in that** the filler, reinforcing agent, or both is provided with reactive end-groups in order to moderate the molecular weight of the polyester, copolyester or both.

9.   The process according to claims 1 to 8, **characterised in that** the average molecular weight $M_n$ of the polyester and/or copolyester is between 30.000 and 300.000 g/mol, preferably between 80.000 and 200.000 g/mol and **characterised in that** the molecular weight ratio is $\leq 2,0$.

10.  The process according to claims 1 to 9, **characterised in that** the proportion of monomer in the polymer is less than 5 weight percent, preferably less than 2 weight percent.

11.  The process according to claims 1 to 10, **characterised in that** the molar ratio between the monomer or a mixture of monomers used and the catalyst/cocatalyst mixture amounts at least 5.000:1.

12.  The process according to claims 1 to 11, **characterised in that** the monomer or a mixture of monomers has a free acid content of a maximum of 10 mequ/kg and a water content of a maximum of 200 ppm.

13.  The process according to claims 1 to 12, **characterised in that** during the oligomerisation stage, a thorough mixing and homogenisation of the reactive mixture and monomers takes place and during the final polymerisation stage, a build-up of pressure with a thermal/mechanical input of energy takes place.

14.  The process according to claims 1 to 13, **characterised in that** the temperature controllable sections of the extrusion machine have a temperature which ranges between 100 and 230°C, preferably between 180 and 195°C.

15.  The process according to claims 1 to 14, **characterised in that**

     1) during a first stage, the initial substances, monomers and comonomers, catalysts, cocatalysts, moderators, stabilisers, fillers and/or reinforcing agents are mixed;
     2) during a second stage, this mixture is added to the extrusion machine;
     3) during a third stage, the polymer obtained is continuously polymerised and discharged; and
     4) during a fourth stage, the polymer obtained is shaped.

16.  The process according to claim 15, **characterised in that** the polymer obtained is hardened by cooling.

17.  The process according to claim 15 or 16, **characterised in that** the cooling of the obtained polymer is preferably made by air on a conveyor belt.

18.  The process according to claims 15 to 17, **characterised in that** the obtained polymer is preferably shaped into plastic granulate in a granulator.

19.  The process according to claims 1 to 18, **characterised in that** the viscosity of the polymer is determined by a in-line or on-line measurement and/or the monomer conversion is determined by a in-line or on-line infrared spectroscopic measurement.

20.  The process according to claims 1 to 19, **characterised in that** the residual monomer content in the polymer is reduced by a degassing unit within the extrusion machine.

**Revendications**

1. Procédé pour la préparation de polyesters aliphatiques et/ou de copolyesters aliphatiques avec une machine d'extrusion, **caractérisé en ce que**

    1) dans une polyréaction, on transforme au moins un monomère du groupe des lactides ;
    2) on utilise dans la polyréaction un mélange réactionnel constitué par au moins du bis(2-éthylhexanoate) de Sn comme catalyseur ;
    3) et en outre au moins une triphénylphosphine comme cocatalyseur ; et
    4) le procédé est un processus d'extrusion réactif réalisé en continu, en une étape.

2. Procédé selon la revendication 1, **caractérisé en ce que** le rapport molaire du cocatalyseur à catalyseur est choisi dans la plage de 100:1 à 1:100.

3. Procédé selon l'une quelconque des revendications 1 ou 2, **caractérisé en ce que** le mélange réactionnel comprend un stabilisateur.

4. Procédé selon la revendication 3, **caractérisé en ce que** le stabilisateur comprend en particulier des organophosphites, des composés phénoliques ou des mélanges de ceux-ci.

5. Procédé selon l'une quelconque des revendications 3 ou 4, **caractérisé en ce que** le stabilisateur est contenu en une proportion de préférence inférieure à 2 parties en poids pour 20 parties en poids de monomère.

6. Procédé selon l'une quelconque des revendications 1 à 5, **caractérisé en ce qu'**un modérateur est contenu pour le contrôle du poids moléculaire dans le mélange réactionnel.

7. Procédé selon l'une quelconque des revendications 1 à 6, **caractérisé en ce que** le mélange réactionnel contient une charge et/ou une charge de renforcement.

8. Procédé selon la revendication 7, **caractérisé en ce que** la charge et/ou la charge de renforcement est de préférence pourvue de groupements terminaux réactifs pour la modération du poids moléculaire du polyester et/ou du copolyester.

9. Procédé selon l'une quelconque des revendications 1 à 8, **caractérisé en ce que** le poids moléculaire $M_n$ du polyester et/ou du copolyester est situé entre 30 000 et 300 000 g/mole, de préférence entre 80 000 et 200 000 g/mole et le rapport des poids moléculaires est $\leq 2{,}0$.

10. Procédé selon l'une quelconque des revendications 1 à 9, **caractérisé en ce que** la proportion de monomères dans le polymère est inférieure à 5% en poids, de préférence inférieure à 2% en poids.

11. Procédé selon l'une quelconque des revendications 1 à 10, **caractérisé en ce que** le rapport molaire entre le monomère ou un mélange de monomères utilisé et le mélange catalyseur/cocatalyseur est d'au moins 5 000:1.

12. Procédé selon l'une quelconque des revendications 1 à 11, **caractérisé en ce que** le monomère ou un mélange de monomères présente une teneur en acide libre d'au maximum 10 méqu/kg et une teneur en eau d'au maximum 200 ppm.

13. Procédé selon l'une quelconque des revendications 1 à 12, **caractérisé en ce qu'**il se produit dans la phase de l'oligomérisation un mélange intime et une homogénéisation du mélange et dans la phase de la polymérisation finale une augmentation de pression avec introduction d'énergie thermique et mécanique.

14. Procédé selon l'une quelconque des revendications 1 à 13, **caractérisé en ce que** les sections thermorégulables de la machine d'extrusion présentent une température dans la plage entre 100 et 230°C, de préférence entre 180 et 195°C.

15. Procédé selon l'une quelconque des revendications 1 à 14, **caractérisé en ce que**

    1) dans une première étape, on mélange les substances de départ : les monomères et les comonomères, les catalyseurs, les cocatalyseurs, les modérateurs, les stabilisateurs, les charges et/ou les charges de renforcement ;

2) dans une deuxième étape, ce mélange est introduit dans une machine d'extrusion ;

3) dans une troisième étape, le polymère obtenu est polymérisé et évacué en continu ; et

4) dans une quatrième étape, le polymère obtenu est façonné.

16. Procédé selon la revendication 15, **caractérisé en ce que** le polymère obtenu est solidifié par refroidissement.

17. Procédé selon l'une quelconque des revendications 15 ou 16, **caractérisé en ce que** le refroidissement du polymère obtenu est de préférence réalisé via une bande transporteuse avec de l'air.

18. Procédé selon l'une quelconque des revendications 15 à 17, **caractérisé en ce que** le polymère obtenu est de préférence façonné dans un granulateur en granulat de matériau synthétique.

19. Procédé selon l'une quelconque des revendications 1 à 18, **caractérisé en ce que** la viscosité du polymère est déterminée par une mesure directe ou en ligne et/ou la conversion du monomère du polymère obtenu est déterminée par une mesure spectroscopique infrarouge directe ou en ligne.

20. Procédé selon l'une quelconque des revendications 1 à 19, **caractérisé en ce que** la teneur résiduelle en monomère dans le polymère peut être réduite par un dispositif de dégazage dans la machine d'extrusion.

Fig.1

EP 0 912 624 B1

**Fig.2**

Fig.3

EP 0 912 624 B1